(19) Europäisches Patentamt
European Patent Office
Office européen des brevets

(11) Veröffentlichungsnummer: **0 131 164**
**B1**

# (12) EUROPÄISCHE PATENTSCHRIFT

(45) Veröffentlichungstag der Patentschrift: **13.08.86**

(51) Int. Cl.⁴: **C 08 G 63/64**

(21) Anmeldenummer: **84106656.6**

(22) Anmeldetag: **12.06.84**

(54) **Verfahren zur Herstellung hochmolekularer Polyestercarbonate.**

(30) Priorität: **23.06.83 DE 3322667**

(43) Veröffentlichungstag der Anmeldung: **16.01.85 Patentblatt 85/3**

(45) Bekanntmachung des Hinweises auf die Patenterteilung: **13.08.86 Patentblatt 86/33**

(84) Benannte Vertragsstaaten: **DE FR GB IT NL**

(56) Entgegenhaltungen: **EP-A-0 000 510**

(73) Patentinhaber: **BAYER AG, Konzernverwaltung RP Patentabteilung, D-5090 Leverkusen 1 Bayerwerk (DE)**

(72) Erfinder: **Waniczek, Helmut, Dr., Wolfskaul 2, D-5000 Koeln 80 (DE)**
Erfinder: **Uerdingen, Walter, Dr., Humperdinckstrasse 41, D-5090 Leverkusen 1 (DE)**
Erfinder: **Brudermanns, Karola, Dechant Krey-Strasse 24, D-5090 Leverkusen (DE)**

**EP 0 131 164 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung hochmolekularer Polyestercarbonate auf Basis nicht-aromatischer Dicarbonsäuren und nicht-aromatischer Diole, wobei das Verfahren bei Erreichen eines gewünschten Kondensationsgrades reversibel gestoppt und danach weitergeführt wird.

Hochmolekulare Polyestercarbonate aus nicht-aromatischen Dicarbonsäuren und nicht-aromatischen Diolen sind bekannt (DE—OS 26 51 639, 27 32 718 & EP—A—510). Sie stellen wertvolle Komponenten für Kunststofflegierungen dar (EP—PS 5736).

Die Synthese von hochmolekularen Polyestercarbonaten kann entsprechend den Angaben der Literatur durch Polykondensation von Polyester- und ggf. Polyetherdiolen mit Diphenylcarbonat bei erhöhter Temperatur erfolgen, wobei kautschukartige Produkte entstehen, die allerdings bei Temperaturen unter 200°C so schlecht fließfähig sind, daß sie aus den entsprechenden Reaktionsgefäßen nur mühsam oder gar nicht ausgetragen werden können und bei Temperaturen über 200°C zu Vernetzung neigen. Dies machte eine industrielle Fertigung dieser Produkte bislang unattraktiv.

Überraschenderweise wurde nun gefunden, daß es möglich ist, die Polykondensation reversibel zu stoppen, so daß man das Produkt aus dem Reaktionsgefäß austragen und dann z.B. in einem Extruder weiterkondensieren kann.

Gegenstand der Erfindung ist ein Verfahren zur Herstellung von nicht-aromatischen Polyestercarbonaten einer Grenzviskosität von 0,9 bis 2,5 dl/g (gemessen an einer Lösung in Tetrahydrofuran bei 25°C) aus a) Polyesterdiol mit einem mittleren Molekulargewicht $\bar{M}_n$ von 800 bis 3.500, ggf. b) Polyetherdiol mit einem mittleren Molekulargewicht $\bar{M}_n$ von 250 bis 3.500 und c) Diarylcarbonat, dadurch gekennzeichnet, daß man in einer 1. Stufe

a) 30 bis 100 Gew.-%, bezogen auf die Summe a+b, Polyesterdiol,

b) 70 bis 0 Gew.-%, bezogen auf die Summe a+b, Polyetherdiol und

c) 0,95 bis 1,2 Mol Diarylcarbonat pro Mol (a+b) in Gegenwart von

d) 50 bis 500 ppm, bezogen auf die Summe a+b+c, Umesterungskatalysator

bei 100 bis 200°C und einem Druck von weniger als 140 mbar unter Entfernen der entstehenden Hydroxylverbindungen und ggf. des Überschusses c) erhitzt, bis das Reaktionsprodukt eine Grenzviskosität von 0,6 bis 1,1 dl/g besitzt, 0,1 bis 10, vorzugsweise 0,2 bis 5, Gew.-%, bezogen auf die Summe a+b+c, ggf. substituiertes Phenol e zusetzt, und in einer 2. Stufe bei 100 bis 200°C und einem Druck von 3 bis 260, vorzugsweise von 5 bis 150, mbar Komponente e entfernt und Temperatur und Druck in diesen Grenzen hält, bis die Grenzviskosität des Reaktionsprodukts sich um mindestens 0,1 dl/g erhöht und mindestens einen Wert von 0,9 dl/g erreicht hat.

Durch den Zusatz von ggf. substituiertem Phenol e kommt die Polykondensation zum Stillstand, kann aber durch Entfernen des Phenols weitergeführt werden. Dies ist besonders überraschend, da Umesterungen von Phenolen mit nicht-aromatischen Carbonsäureestern unbekannt sind und somit keine Verschiebung des chemischen Gleichgewichts aufgrund der Phenolzugabe erwartet werden konnte.

Der Versuch, das Phenol gar nicht erste vollständig abzutrennen, führt dagegen nicht zum Erfolg, weil sich dann die Reaktionszeit so stark verlängert, daß man vernetzte Produkte erhält.

Bevorzugte Polyesterdiole a) sind Umsetzungsprodukte von $C_2$—$C_{12}$-Dicarbonsäuren und $C_2$—$C_{12}$-Diolen. Besonders bevorzugte Dicarbonsäuren sind acyclisch. Beispiele bevorzugter Dicarbonsäuren sind Oxalsäure, Malonsäure, Bernsteinsäure, Glutarsäure, Adipinsäure, Korksäure, Azelainsäure, Sebacinsäure, Hexahydrophthalsäure. Selbstverständlich können zur Herstellung der Polyesterdiole die Dicarbonsäuren—soweit möglich—in Form ihrer reaktionsfähigen Derivate, z.B. der Anhydride, eingesetzt werden. Beispiele bevorzugter Diole für die Herstellung der Polyesterdiole a) umfassen Ethergruppenfreie Diole und Etherdiole mit Molekulargewichten $\bar{M}_n$ unter 250, wie z.B. Ethylenglykol, Propandiol-1.2 und -1.3, Butandiol-1.4 und -2.3, Neopentylglykol, Hexandiol-1.6, Octandiol-1.8, 1.4 - Bis - (hydroxymethyl) - cyclohexan, 2 - Methylpropandiol - 1.3, Di-, Tri- und Tetraethylenglykol, Dipropylenglykol, Dibutylenglykol. Die Polyesterdiole a) tragen endständige Hydroxylgruppen.

Bevorzugte Polyetherdiole b) sind beispielsweise Polyethylenoxidglykole, Poly - (propylenoxid - 1.2) - glykole, Poly - (propylenoxid - 1.3) - glykole, Poly - (butylenoxid - 1.2) - glykole, Poly - (butylenoxid - 1.4) - glykole, Polypentylenoxid - 1.2) - glykole, Poly - (hexamethylenoxid - 1.6) - glykole, Poly - (heptamethylenoxid - 1.7) - glykole, Poly - (octamethylenoxid - 1.8) - glykole, Poly-(nonamethylenoxid - 1.9) - glykole und die Additionsverbindungen aus Ethylenoxid und Propylenoxid, ggf. in Blockmischform.

Das mittlere Molekulargewicht $\bar{M}_n$ der Polyesterdiole a) und der Polyetherdiole b) wird dampfdruckosmometrisch in Tetrahydrofuran bestimmt.

Bevorzugte Diarylcarbonate c) entsprechen der Formel

$$Ar-O-\underset{\underset{O}{\|}}{C}-O-Ar' \qquad (I)$$

worin Ar und Ar' gleich oder verschieden sind und für $C_6$—$C_{18}$-Arylreste stehen, wobei diese Arylreste durch 1 bis 2 $C_1$—$C_4$-Alkylreste, Nitrogruppen oder Halogenatome (vorzugsweise Chlor oder Brom) substituiert sein können, wie z.B. alkylsubstituierte Diphenylcarbonate wie Bischlorphenylcarbonat, Dinaphthylcarbonat sowie

dessen Alkyl- und Halogen-substituierte Derivate; unsymetrische Diarylcarbonate wie Phenyl-tolyl-carbonat, Phenyl-chlorphenyl-carbonat, 2-Tolyl-4-tolyl-carbonat und 4-Tolyl-4-chlorphenyl-carbonat. Das bevorzugteste Diarylcarbonat c) ist Diphenylcarbonat.

Bevorzugte Umesterungskatalysatoren d) sind z.B. bei R. E. Wilfong in J. Polym. Sci. *54*, 385 (1961) beschrieben. Beispiele bevorzugter Katalysatoren d) sind Alkali-und Erdalkalialkoholate und -phenolate, tertiäre Amine wie Triethylendiamin, Triethylamin und Pyridin, sekundäre Amine wie Morpholin und Pyrrolidin, Metalloxide wie Antimontrioxid, Metallhalogenide wie Zinkchlorid, Titantetrachlorid und Ester von Übergangsmetallsäuren wie Titantetrabutylat.

Bevorzugte ggf. substituierte Phenole e entsprechen der Formel

$$Ar{-}OH \qquad (II)$$

worin Ar die oben für Ar in Formel I angegebene Bedeutung hat. "Ggf. substituierte Phenole" im Sinne der Erfindung umfassen also auch andere Hydroxyarylverbindungen wie z.B. Naphthole. Bevorzugteste Verbindung ist unsubstituiertes Phenol.

Die Endgruppen der nach dem erfindungsgemäßen Verfahren hergestellten Polyestercarbonate ergeben sich aufgrund der Mengenverhältnisse der Ausgangsmaterialien, sind also in der Regel entweder Hydroxylgruppen oder, vorzugsweise, Arylcarbonatgruppen.

Das erfindungsgemäße Verfahren wird vorzugsweise in Substanz durchgeführt, doch kann auch in Gegenwart inerter Lösungsmittel, wie aliphatischer oder aromatischer Kohlenwasserstoffe, gearbeitet werden.

Die erste Stufe des erfindungsgemäßen Verfahren findet vorteilhafterweise unter Rühren statt, die zweite Stufe am besten in einem Extruder.

Die zweite Verfahrensstufe kann kontinuierlich oder diskontinuierlich durchgeführt werden. Die Verweilzeit unter den Bedingungen der zweiten Stufen beträgt im allgemeinen 3 bis 20 Minuten, vorzugsweise 5 bis 15 Minuten.

Nach einer besonderen Ausführungsform des erfindungsgemäßen Verfahrens werden Polyesterdiol und Diphenylcarbonat im Molverhältnis 1:1 bis 1:1,2 in Gegenwart von Natriumphenolat als Katalysator auf 150 bis 185°C erhitzt, bis die Grenzviskosität des Reaktionsprodukts 0,7 bis 0,9 dl/g beträgt, wobei die entstehenden flüchtigen Reaktionsprodukte bei einem Druck von 4 bis 65 mbar abdestilliert werden; dann werden unter Normaldruck unter Rühren 0,3 bis 1 Gew.-%, bezogen auf die Summe von Polyesterdiol und Diphenylcarbonat, Phenol zugegeben und das Reaktionsgemisch mittels eines dreistufigen Entgasungsextruders bei 170 bis 185°C und 13 bis 65 mbar entgast, so daß die Verweilzeit des Reaktionsprodukts unter diesen Bedingungen 8 bis 15 Minuten beträgt.

Die nach den erfindungsgemäßen Verfahren hergestellten Polyestercarbonate können bequem einer Stranggranulation unterworfen werden und gelangen so in eine Form, in der sie als Zusätze zu Kunststoffen, z.B. zu PVC, sehr günstig eingesetzt werden können.

Die in den folgenden Beispielen genannten Teile sind Gewichtsteile und Verhältnisse sind Gewichtsverhältnisse.

Beispiel 1

24.500 Teile eines Polyesterdiols aus Adipinsäure und einer Mischung aus n - Hexan - 1,6 - diol/Neopentylglykol im Verhältnis 65:35 vom mittleren Molekulargewicht $\bar{M}_n$ 2.000, 2.884 Teile Diphenylcarbonat und 6 Teile Natriumphenolat werden unter Rühren binnen 1,5 Sunden auf 182°C erhitzt, wobei man den Druck auf 5 mbar senkt und flüchtige Polykondensationsprodukte, die größenteils aus Phenol bestehen, abdestilliert. Unter diesen Reaktionsbedingungen wird noch 3 Stunden gerührt, danach das Reaktionsgefäß mit Stickstoff belüftet. Das entstandene Polyestercarbonat besitzt eine Grenzviskosität von 0,9 dl/g.

Nun werden 150 Teile Phenol zugegeben und unter leichtem Stickstoffüberdruck eingemischt. Das Reaktionsgemisch wird bei 180°C gehalten und binnen 3 Stunden kontinuierlich in die Einzugsöffnung eines Entgasungsextruders mit einem Wellenlänge:Wellendurchmesser-Verhältnis von L/D=40 dosiert. Bei 180°C und 30 mbar werden das zugesetzte Phenol und die neu entstehenden flüchtigen Reaktionsprodukte an drei Ausdampftürmen abdestilliert. An der Düse des Extruders tritt das kautschukartige Polyestercarbonat aus, das mit einem Stranggranulator zerkleinert werden kann. Das erhaltene Polyestercarbonat besitzt eine Grenzviskosität von 1,52 dl/g.

Beispiel 2 (Vergleich)

Der Versuch von Beispiel 1 wird wiederholt mit der Ausnahme, daß nach der 4 1/2-stündigen Reaktion im Rührreaktor kein Phenol zugegeben wird. Während des Austragens des Produkts aus dem Reaktor steigt die Viskosität so stark, daß nach einer weiteren Stunde das Reaktionsprodukt nicht mehr in den Extruder gefördert werden kann; nach 6 Stunden ist der Rührer gebrochen.

Beispiel 3

12.000 Teile eines Polyesterdiols aus Adipinsäure und einer Mischung aus n-Hexan - 1,6 - dio/Neopentylglykol im Verhältnis 65:35 vom mittleren Molekulargewicht $\bar{M}_n$ 2,000, 12.000 Teile eines Polyesterdiols aus Adipinsäure und Hexandiol-1,6 mit einem mittleren Molekulargewicht von $\bar{M}_n$ 950, 4.380 Teile Diphenylcarbonat und 8 Teile Natriumphenolat werden wie in Beispiel 1 umgesetzt. Die Viskosität des Polyestercarbonats der ersten Stufe beträgt 0,85 gl/g.

Man erhält farbloses kautschukartiges Polyestercarbonat mit einer Viskosität von 1,1 dl/g.

Beispiel 4

5.000 Teile eines Polyesterdiols aus Adipinsäure und einer Mischung aus n - Hexan - 1,6 - diol/Neopentylglykol im Verhältnis 65:35 vom mittleren Molekulargewicht $\bar{M}_n$ 1.835, 1.500 Teile eines Polypropylenoxiddiols mit einem mittleren Molekulargewicht $\bar{M}_n$ 400, 1.524 Teile Diphenylcarbonat und 2,4 Teile Natriumphenolat werden unter Rühren binnen 1 Stunde auf 150°C erhitzt, wobei man den Druck auf 8 mbar senkt und vor allem Phenol abdestilliert. Dann wird binnen 4 Stunden auf 185°C erhitzt und der Druck auf 3 mbar erniedrigt. Eine dann gezogene Probe besitzt eine Grenzviskosität von 0,79 dl/g.

Nun wird bei Normaldruck eine Lösung von 40 Teilen Phenol in 3.000 Teilen Toluol in den Reaktor gepumpt. Nach 20 Minuten wird das Reaktionsgemisch in einem Entgasungsextruder bei 185°C und 20 mbar entgast, so daß die Verweilzeit im Extruder 12 Minuten beträgt.

Das kautschukartige Reaktionsprodukt besitzt eine Grenzviskosität von 1,22 dlg.

**Patentansprüche**

1. Verfahren zur Herstellung von nicht-aromatischen Polyestercarbonaten einer Grenzviskosität von 0,9 bis 2,5 dl/g (gemessen an einer Lösung in Tetrahydrofuran bei 25°C) aus a) Polyesterdiol mit einem mittleren Molekulargewicht $\bar{M}_n$ von 800 bis 3.500, ggf. b) Polyetherdiol mit einem mittleren Molekulargewicht $\bar{M}_n$ von 250 bis 3.500 und c) Diarylcarbonat, dadurch gekennzeichnet, daß man in einer 1. Stufe

a) 30 bis 100 Gew.-%, bezogen auf die Summe a+b, Polyesterdiol,

b) 70 bis 0 Gew.-%, bezogen auf die Summe a+b, Polyetherdiol und

c) 0,95 bis 1,2 Mol Diarylcarbonat pro Mol (a+b) in Gegenwart von

d) 50 bis 500 ppm, bezogen auf die Summe a+b+c, Umesterungskatalysator

bei 100 bis 200°C und einem Druck von weniger als 140 mbar unter Entfernen der entstehenden Hydroxylverbindungen und ggf. des Überschusses c) erhitzt, bis das Reaktionsprodukt eine Grenzviskosität von 0,6 bis 1,1 dl/g besitzt, 0,1 bis 10 Gew.-%, bezogen auf die Summe a+b+c, ggf. substituiertes Phenol e zusetzt, und in einer 2. Stufe bei 100 bis 200°C und einem Druck von 3 bis 260 mbar Komponente e entfernt und Temperatur und Druck in diesen Grenzen hält, bis die Grenzviskosität des Reaktionsprodukts sich um mindestens 0,1 dl/g erhöht und mindestens einen Wert von 0,9 dl/g erreicht hat.

2. Verfahren nach Anspruch 1, dadurch gekennzeichnet, daß man in der 1. Stufe 0,2 bis 5 Gew.-%, bezogen auf die Summe a+b+c, ggf. substituiertes Phenol e zusetzt.

3. Verfahren nach Ansprüchen 1 und 2, dadurch gekennzeichnet, daß der Druck in der 2. Stufe 5 bis 150 mbar entspricht.

**Revendications**

1. Procédé de production de polyester-carbonates non aromatiques de viscosité intrinsèque allant de 0,9 à 2,5 dl/g (mesurée sur une solution dans le tétrahydrofuranne à 25°C) à partir a) d'un polyesterdiol ayant un poids moléculaire moyen $\bar{M}_n$ de 800 à 3500, le cas échéant, b) d'un polyétherdiol ayant un poids moléculaire moyen $\bar{M}_n$ de 250 à 3500 et c) d'un carbonate de diaryle, caractérisé en ce qu'on chauffe dans une première étape

a) 30 à 100% en poids, par rapport à la somme a+b, de polyesterdiol,

b) 70 à 0% en poids, par rapport à la somme a+b, de polyétherdiol et

c) 0,95 à 1,2 mole de carbonate de diaryle par mole de (a+b) en présence de

d) 50 à 500 ppm, par rapport à la somme a+b+c, de catalyseur de transestérification

à une température de 100 à 200°C et sous une pression inférieure à 140 mbars avec élimination des composés hydroxylés formés et, le cas échéant, de l'excès de c), jusqu'à ce que le produit de réaction ait une viscosité intrinsèque de 0,6 à 1,1 dl/g, on ajoute 0,1 à 10% en poids, par rapport à la somme a+b+c, de phénol e éventuellement sustitué et dans une seconde étape, à 100—200°C et sous une pression de 3 à 260 mbars, on élimine le composant e et on maintient la température et la pression dans ces limites jusqu'à ce que la viscosité intrinsèque du produit réactionnel se soit élevée d'au moins 0,1 dl/g et ait atteint au moins une valeur de 0,9 dl/g.

2. Procédé suivant la revendication 1, caractérisé en ce qu'on ajoute dans la première étape 0,2 à 5% en poids, par rapport à la somme a+b+c, de phénol e éventuellement substitué.

3. Procédé suivant les revendication 1 et 2, caractérisé en ce que la pression dans la seconde étape correspond à 5—150 mbars.

**Claims**

1. Process for the production of non-aromatic polyester carbonates having an intrinsic viscosity of 0.9 to 2.5 dl/g (measured using a solution in tetrahydrofuran at 25°C) from a) a polyester diol having an average molecular weight $\bar{M}_n$ of 800 to 3,500, optionally b) a polyether diol having an average molecular weight $\bar{M}_n$ of 250 to 3,500 and c) a diaryl carbonate, characterised in that, in a 1st stage,

a) 30 to 100% by weight, based on the sum of a+b, of a polyester diol,

b) 70 to 0% by weight, based on the sum of a+b, of a polyether diol, and

c) 0.95 to 1.2 moles of a diaryl carbonate per mole of (a+b), are heated in the presence of

d) 50 to 500 ppm, based on the sum of a+b+c, of a transesterification catalyst,

at 100 to 200°C and under a pressure of less than 140 mbars while removing the hydroxyl compounds which form and optionally the excess of c), until the reaction product has an intrinsic viscosity of 0.6 to 1.1 dl/g, 0.1 to 10% by weight, based on the sum of a+b+c, of optionally substituted phenol e are added, and, in a 2nd stage, component e is removed at 100 to 200°C and

under a pressure of 3 to 260 mbars and the temperature and pressure are kept within these limits, until the intrinsic viscosity of the reaction product increases by at least 0.1 dl/g and has reached a value of at least 0.9 dlg.

2. Process according to Claim 1, characterised in that 0.2 to 5% by weight, based on the sum of a+b+c, of optionally substituted phenol e are added in the 1st stage.

3. Process according to Claims 1 and 2, characterised in that the pressure in the 2nd stage is 5 to 150 mbars.